# EUROPÄISCHE PATENTSCHRIFT

(11) **EP 4 276 340 B1**
(45) Veröffentlichungstag und Bekanntmachung des Hinweises auf die Patenterteilung: **01.05.2024**
(21) Anmeldenummer: 22172973.4
(22) Anmeldetag: 12.05.2022
(51) Int. Cl.: F16L 23/04, F16L 23/06, G01N 31/00, G01N 31/12, G01N 35/10

(54) **ANALYSEEINRICHTUNG FÜR DIE ELEMENTARANALYSE**
ANALYTIC DEVICE FOR ELEMENTARY ANALYSIS
DISPOSITIF D'ANALYSE POUR L'ANALYSE ÉLÉMENTAIRE

(43) Veröffentlichungstag der Anmeldung: 15.11.2023
(73) Patentinhaber: C. Gerhardt GmbH & Co. KG, 53639 Königswinter (DE)
(72) Erfinder: JEUB, Uwe, 53639 Königswinte (DE); WINTERSCHEIDT, Nina, 53639 Königswinter (DE); MÜLLER, Nils, 53572 Unkel (DE)
(74) Vertreter: Grünecker Patent- und Rechtsanwälte PartG mbB

(56) Entgegenhaltungen:
- EP-B1- 3 112 859
- JP-U- 3 062 952
- US-A- 3 722 855
- US-A- 4 934 408
- US-A1- 2015 285 311
- US-A1- 2017 191 589

## Beschreibung

Die vorliegende Erfindung betrifft eine Analyseeinrichtung für die Elementaranalyse und will das Einbringen von Proben in die Analyseeinrichtung verbessern.

Als gattungsgemäß wird eine Analyseeinrichtung für die Elementaranalyse mit einer Probenzuführeinrichtung angesehen. Die Probenzuführeinrichtung hat eine Einbringöffnung zum Einbringen einer Probe. Eine solche Analyseeinrichtung mit Probenzuführeinrichtung ist beispielsweise aus EP 3 112 859 B1 bekannt. Die Probenzuführeinrichtung dient dem Einbringen einer Probe in ein Analysegerät für die Elementaranalyse durch einen Einbringschacht. Dazu ist eine Leitung für Sauerstoff und Erdgas vorgesehen. Des Weiteren hat die Analyseeinrichtung einen Reaktor für die katalytische Verbrennung der Probe. Stromabwärts des Reaktors ist ein Reduktionsreaktor vorgesehen. Stromabwärts des Reduktionsreaktors ist ein Adsorber vorgesehen. Stromabwärts des Adsorbers ist ein Detektor vorgesehen. Des Weiteren ist eine Logikeinheit zur Verarbeitung von Daten vorgesehen, die von dem Detektor ermittelt werden.

Eine solche Analyseeinrichtung dient insbesondere der Bestimmung des Stickstoffgehaltes in einer Probe.

Bei dem zuvor erwähnten Stand der Technik gleitet ein Probenhalter über eine Tischplatte, wobei der Probenhalter linear bewegt wird, um eine vorbestimmte Probe über die Einbringöffnung zu bringen und von dort durch den Einbringschacht in den Reaktor abzuwerfen, wozu sich der Einbringschacht im Schwerefeld der Erde erstreckt und die oben liegende Einbringöffnung mit dem Reaktor verbindet, der als Rohr in vertikaler Ausrichtung in der Analyseeinrichtung aufgenommen ist. Der Einbringschacht erstreckt sich auch bei der vorliegenden Erfindung in Zuführrichtung hinter der Einbringöffnung und mündet unmittelbar an die Einbringöffnung.

Aus EP 3 112 859 B1 ist es bekannt, zwischen der Einbringöffnung und dem Reaktor einen Schiebekolben mit einer Aufnahmebohrung vorzusehen. Die zu analysierende Probe fällt durch die Einbringöffnung in die Aufnahmebohrung. Danach wird der Schiebekolben so verschoben, dass die Aufnahmebohrung mit dem Einbringschacht fluchtet, sodass die Probe aufgrund der Schwerkraft zugeführt wird.

Bei der aus dem Stand der Technik bekannten Analyseeinrichtung ist der Einbringschacht geteilt, so dass die Probenzuführeinrichtung von der Einbringöffnung wegbewegt werden kann, so dass in Verlängerung des Einbringschachtes und über der Einbringöffnung ein rohrförmiger Reaktor der Analyseeinrichtung aus dem Innern derselben herausgezogen und ausgetauscht werden kann. Ein reaktorseitiger Abschnitt des Einbringschachtes und ein der Probenzuführreinrichtung zugeordneter Abschnitt des Einbringschachtes sind dabei über eine Kopplungseinrichtung in Form eines Schraubverschlusses lösbar miteinander verbunden.

Das Lösen dieser Kopplungseinrichtung ist problembehaftet. Beim Betrieb erwärmt sich die Kopplungseinrichtung, so dass die Schraube des Schraubverschlusses nicht unmittelbar manuell betätigt werden kann. Darüber hinaus ist die Handhabung der vorbekannten Kopplungseinrichtung zeitaufwändig und mühsam.

Der folgenden Erfindung liegt das Problem zugrunde, eine Analyseeinrichtung zu schaffen, mit welcher sich die beiden Abschnitte des Einbringschachtes einfacher zum Fügen des Einbringschachtes verbinden lassen.

Zur Lösung dieses Problems wird mit der folgenden Erfindung eine Kopplungseinrichtung mit zwei Klauen vorgeschlagen, die relativ zueinander beweglich sind. Diese Klauen sind üblicherweise in einer Ebene relativ zueinander beweglich. Sie können translatorisch und/ oder rotatorisch relativ zueinander beweglich sein. Der reaktorseitige Abschnitt des Einbringschachtes und der Probenzuführeinrichtung zugeordnete Abschnitt des Einbringschachtes haben jeweils Schrägflächen, die von dem jeweiligen freien Ende der Abschnitte des Einbringschachtes wegweisen. Zum Fügen des Einbringschachtes und zur Festlegung der beiden Abschnitte relativ zueinander wirken diese Schrägflächen mit Gegenflächen der Klauen zusammen.

Für die erfindungsgemäße Lösung ist es zunächst wesentlich, dass die Schrägflächen von den freien Enden wegweisen, d.h. die auf beiden Seiten der Trennung vorgesehenen Schrägflächen voneinander wegweisen. Gegen jede der Flächen radial wirkende Gegenflächen bewirken dementsprechend auch eine axiale Zustellbewegung, die abhängig von der Schrägheit der Schrägflächen ist. Die Flächenanteile einer beispielsweise rein radial wirkenden Kraft werden aufgrund der Schrägfläche in eine axiale Kraftkomponente und eine radiale Kraftkomponente aufgeteilt. Durch die axiale Kraftkomponente, die auf beiden Seiten der Trennung wirkt, werden die mit den Schrägflächen versehenen Körper aufeinander zu gedrängt, so dass diese Körper axial gegeneinander gelegt werden. Dadurch wird die Möglichkeit einer gasdichten Verbindung zwischen den beiden Abschnitten geschaffen.

Die Schrägflächen können jede beliebige insbesondere umfängliche Ausgestaltung haben. Sie können polygonal am Umfang der zugeordneten Körper bzw. Bauelemente vorgesehen sein. Die Schrägflächen sind vorzugsweise durch einen Konus gebildet, der sich üblicherweise vollumfänglich um den Außenumfang des jeweiligen Bauteils oder Körpers erstrecken kann. Dieser Konus ist bevorzugt rotationssymmetrisch ausgebildet.

Die Schrägflächen sind dabei besonders bevorzugt an dem Ende der jeweiligen Abschnitte vorgesehen. So kann jeweils ein Konus mit seinem größten Durchmesser auch die Stirnfläche und damit das jeweilige Ende der Abschnitte des Einbringschachtes ausbilden. Diese Stirnflächen liegen üblicherweise beim Fügen nicht unmittelbar gegeneinander. Vielmehr wird zwischen die beiden Enden üblicherweise ein Dichtring eingesetzt. Der Dichtring wird zwischen den festgelegten Abschnitten eingeschlossen und beabstandet die Enden der jeweiligen Abschnitte des Einbringschachtes im gefügten Zustand.

Bevorzugt befindet sich der Dichtring im Bereich des Innenumfangs und begrenzt somit den Einbringschacht. Dabei ragt der Dichtring üblicherweise von den Innenflächen nach innen vor, die den Einbringschacht ausbilden bzw. begrenzen. Der reaktorseitige Abschnitt des Einbringschachtes und auch der der Probenzuführeinrichtung zugeordnete Abschnitt des Einbringschachtes haben dazu üblicherweise konkave Mulden, die entsprechend der Querschnittsgeometrie des Dichtringes angepasst sind. Der Dichtring ist üblicherweise mit einem kreisrunden Querschnitt versehen. So haben die jeweiligen Abschnitte bevorzugt kreissegmentförmige Mulden, die den Dichtring teilumfänglich berühren und abstützen.

Der Dichtring kann einen im Verhältnis zu der konkaven Mulde leicht vergrößerten Außendurchmesser haben, so dass beim Fügen der Ring insgesamt radial geringfügig nach innen gedrängt wird, um sich beispielweise an einen Glaskörper anzulegen, der zu dem Reaktor führt. Dadurch wird der Glaskörper abgedichtet und auch mit Abstand zu den Wandungen der beiden Abschnitte des Einbringschachtes gehalten, die üblicherweise aus Metall, bevorzugt einem Buntmetall beispielsweise Messing gebildet sind. Es versteht sich, dass die konkaven Mulden in Umfangsrichtung durchgehend ausgebildet sind und der Kontur des Dichtringes folgen.

Gemäß einer bevorzugten Weiterbildung der vorliegenden Erfindung sind die Mulden um einen gemeinsamen Gelenkzapfen verschwenkbar gelagert. Diese Ausgestaltung nutzt eine rein rotatorische Bewegung um die Klauen gegen die beiden Abschnitte anzulegen. Dabei ist der Gelenkzapfen üblicherweise ortsfest an oder relativ zu einem Gestell der Analyseeinrichtung vorgesehen. Bevorzugt befindet sich der Gelenkzapfen in einer Bohrung, die gegenüber dem eigentlichen Reaktor thermisch entkoppelt ist, so dass die Kopplungseinrichtung nur geringfügig beim Betrieb der Analyseeinrichtung erwärmt wird. Denn die Klauen werden bevorzugt reaktorseitig abgestützt.

Die Klauen sind weiterhin bevorzugt in Längsrichtung des Gelenkzapfens verschieblich bzw. manipulierbar. Sie können dementsprechend der Annäherung der beiden Abschnitte im Rahmen des Fügens folgen und setzen dieser Annäherungsbewegung keinen eigenen Widerstand entgegen.

Bevorzugt hat jede der Klauen zueinander weisende schräge Gegenflächen, die mit den Schrägflächen der Abschnitte zusammenwirken, um den Einbringschacht zu fügen. Teil der Erfindung sind Varianten der Klauen die bei denen die Neigung der schrägen Gegenflächen üblicherweise im Wesentlichen der Neigung der Schrägflächen entspricht, aber auch Varianten bei denen die Neigung der schrägen Gegenflächen die Neigung der Schrägflächen übersteigt. Die schrägen Gegenflächen der Klauen sind einander zugewandt. Somit ergibt sich auch eine Zentrierung der Klauen im Rahmen des Fügens relativ zu dem zwischen den beiden Abschnitten verbleibenden Freiraum, der im Rahmen des Fügens vermindert wird. Es versteht sich, dass die schrägen Gegenflächen sich über eine gewisse Höhe, d.h. axiale Länge des Einbringschachtes erstrecken. Zwar sind die Schrägflächen üblicherweise höher als die Gegenflächen. Die Gegenflächen erstrecken sich aber über eine Höhe von etwa 30-50 % der Höhe der Schrägflächen. Diese Überdeckung wird dabei über die Längsachse des Einbringschachtes abgetragen.

Im Hinblick auf eine verbesserte thermische Isolation zwischen dem Einbringschacht und der Kopplungseinrichtung haben die Innenflächen der Klauen mehrere radial nach innen vorspringende Gegenflächenabschnitte. Diese Gegenflächenabschnitte sind auch auf dem Innenumfang der Klauen verteilt und mit umfänglichem Abstand zueinander vorgesehen. Jede der Klauen kann zwischen zwei und vier solcher Gegenflächenabschnitte haben. Jeder der Gegenflächenabschnitte weist schräge Gegenflächen auf, die mit den entsprechenden Schrägflächen der Abschnitte des Einbringschachtes in Wirkverbindung gebracht werden können. Durch diese Weiterbildung ist die Kontaktfläche zwischen den Klauen und den Abschnitten des Einbringschachtes vermindert und damit auch der thermische Eintrag in die Klauen.

Im Hinblick auf eine leichte Handhabung wird gemäß einer bevorzugten Weiterbildung der vorliegenden Erfindung vorgeschlagen, jede der Klauen mit einem von der Klaue abragenden Betätigungsarm zu versehen. Der Betätigungsarm befindet sich auf der dem Gelenk der Klauen abgewandten Seite der Klauen, wenn diese allein gelenkig miteinander verbunden sind. Aufgrund der Länge der Betätigungsarme ergibt sich nicht nur eine Hebelwirkung, die das manuelle Fügen des Einbringschachtes verbessert, sondern auch eine weitere thermische Entkopplung. Die Betätigungsarme wirken auch wie Kühlrippen, so dass selbst bei einer Ausgestaltung der Betätigungsarme aus einem Metall als Werkstoff mit relativ guter Wärmeleitfähigkeit die freien Enden der Betätigungsarme ein manuelles Angreifen ermöglichen. Zusätzlich können die Betätigungsarme an ihrer Außenfläche insbesondere an ihrem freien Ende mit einer thermischen Isolierung versehen und/oder aus einem Material mit schlechter Wärmeleitfähigkeit wie beispielsweise Kunststoff gebildet oder von diesem überzogen sein.

Gemäß einer weiteren bevorzugten Ausgestaltung der vorliegenden Erfindung hat zumindest einer der Betätigungsarme ein Festlegungselement. Dieses Festlegungselement ist mit dem anderen der Betätigungsarme in Wirkverbindung bringbar. So kann das Festlegungselement die beiden Betätigungsarme beispielsweise nach dem Fügen mechanisch miteinander koppeln, um die Vorspannung der Klauen gegen die beiden Abschnitte des Einbringschachtes zu sichern.

Weitere Vorteile und Einzelheiten der vorliegenden Erfindung ergeben sich aus der nachfolgenden Beschreibung eines Ausführungsbeispiels in Verbindung mit der Zeichnung. In dieser zeigen:
- Figur 1: eine schematische Darstellung der wesentlichen Komponenten einer Analyseeinrichtung für die Elementaranalyse nach DUMAS;
- Figur 2: eine teilweise geschnittene perspektivische Darstellung des oberen Teils der Analyseeinrichtung in einer ersten Position des Verschlusselementes;
- Figur 3: eine Darstellung gemäß Figur 2 in einer zweiten Position des Verschlusselementes;
- Figur 4: eine perspektivische, teilweise geschnittene Seitenansicht des oberen Teils mit einer anderen Schnittebene als Figur 2 und 3;
- Figur 5: eine Querschnittsansicht des oberen Teils der Zuführeinrichtung Z;
- Figur 6: eine Seitenansicht eines Ausführungsbeispiels einer Einrichtung zum Bewegen der Probenzuführeinrichtung in einer Gebrauchsstellung;
- Figur 7: die Darstellung nach Figur 5 in einer Nicht-Gebrauchsstellung;
- Figur 8: eine Draufsicht auf ein Ausführungsbeispiel einer Kopplungseinrichtung;
- Figur 9: eine teilweise geschnittene perspektivische Seitenansicht des Ausführungsbeispiels der Kopplungseinrichtung nach Figur 7;
- Figur 10: eine perspektivische Stirnseitenansicht der Kopplungseinrichtung nach den Figuren 7 und 8;
- Figur 11: eine Draufsicht auf eine Variante der Kopplungseinrichtung K,
- Figur 12: eine perspektivische Schnittansicht der Variante nach Figur 11
- Figur 13: eine teilweise Draufsicht auf die Grundplatte eines modifizierten Ausführungsbeispiels;
- Figur 14: eine perspektivische Seitenansicht einer Hülse des modifizierten Ausführungsbeispiels und
- Figur 15: eine Darstellung gemäß Figur 2 des modifizierten Ausführungsbeispiels.

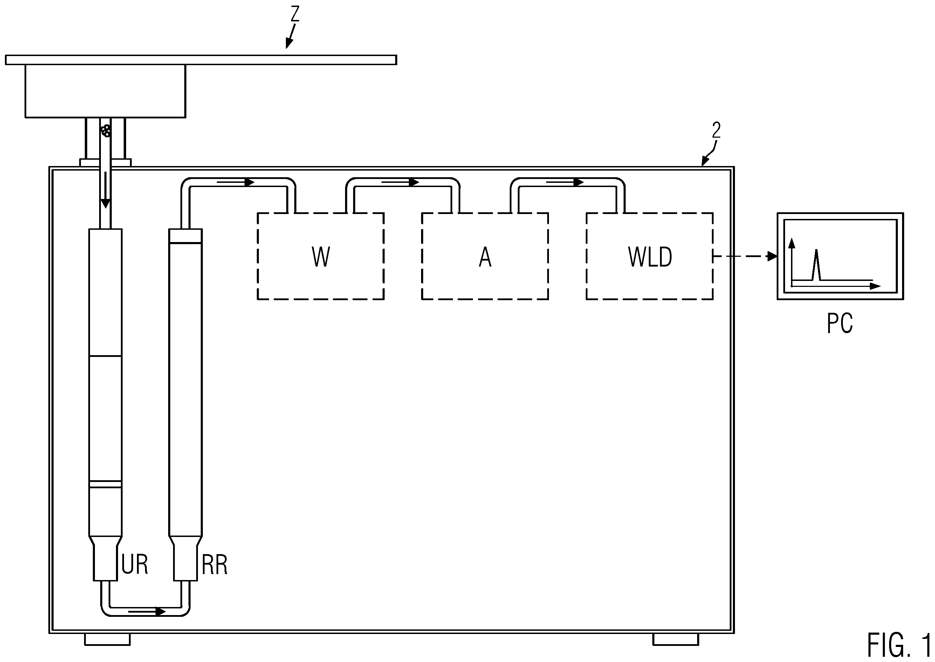

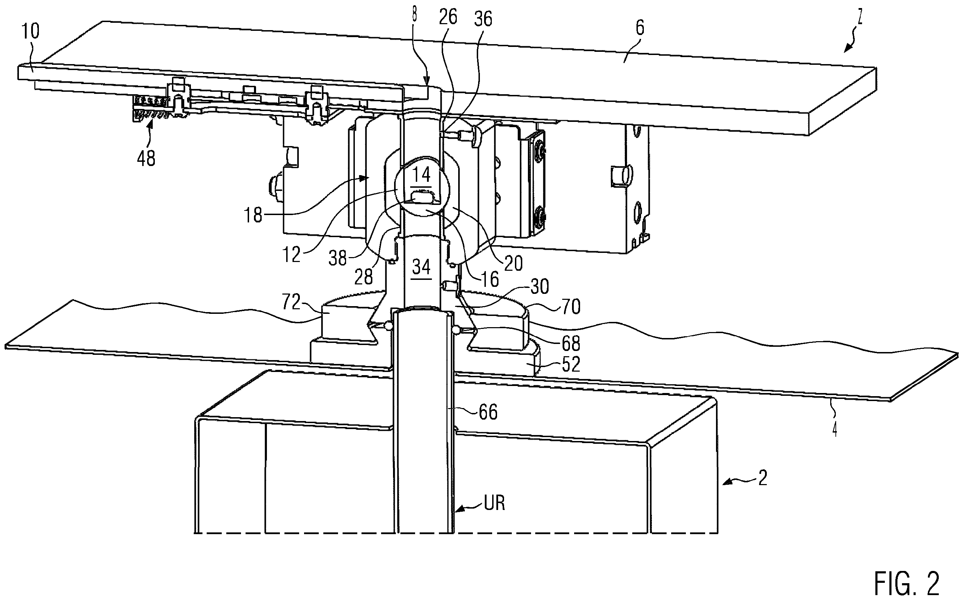

Die Figur 1 zeigt ein Ausführungsbeispiel einer Analyseeinrichtung mit einem Reaktor UR für eine katalytische Verbrennung. Die dabei entstehenden Gase werden einem Reduktionsreaktor RR zugeführt, der insbesondere NOₓ zu N₂ reduziert. Danach wird in dem Verbrennungsgas enthaltenes Wasser H₂O adsorbiert. In dem Gas enthaltenes CO₂ wird danach aus dem Gas entfernt. Schließlich wird der Stickstoffgehalt gemessen (bei WLD) und zwar üblicherweise durch Messen der Wärmeleitfähigkeit des hindurchgeleitenden Gases. Der gemessene Wert wird über einen Rechner (PC) analysiert und ausgegeben. Das in Fig. 2 eingezeichnete Analyseeinrichtungsgehäuse 2 nimmt die Reaktoren auf. Die nachstehend beschriebene Probenzuführeinrichtung ist in Figur 1 mit Großbuchstaben Z gekennzeichnet und wird nachstehend unter Bezugnahme auf die Figuren 2 ff. erläutert.

Oberhalb des Analyseeinrichtungsgehäuses 2 befindet sich eine Halteplatte 4, ist, die jedoch von Wärmequellen innerhalb des Analyseeinrichtungsgehäuses 2 bestmöglich thermisch entkoppelt ist.

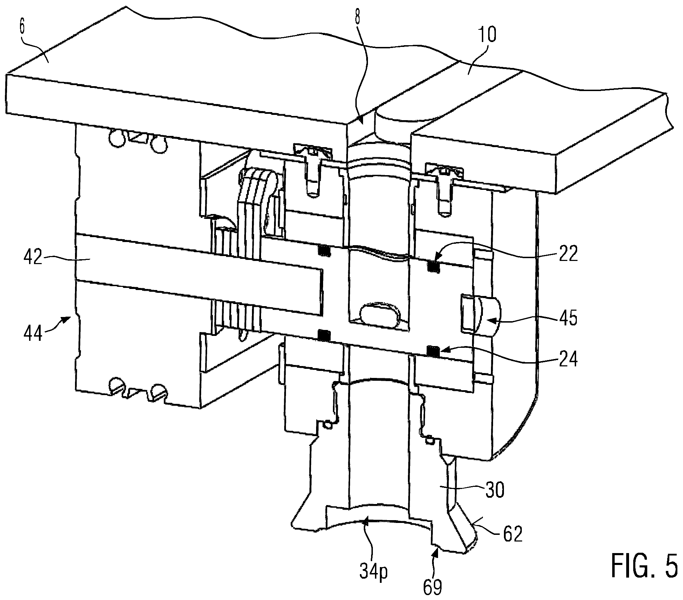

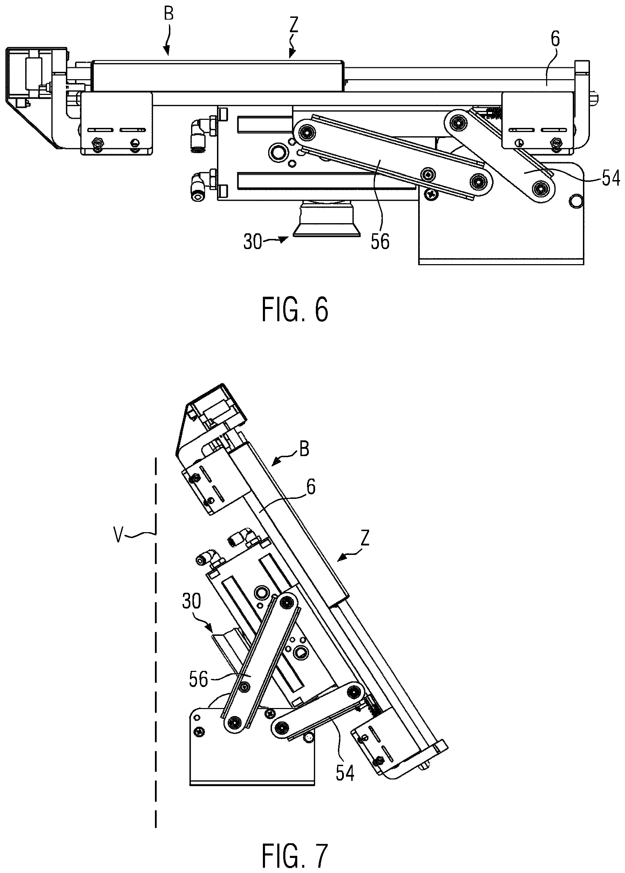

Die Halteplatte 4 kann Bestandteil eines Maschinengestells sein, auf das nachstehend lediglich unter Bezugnahme auf die Figuren 5 und 6 kurz eingegangen wird.

Dieses Maschinengestell trägt auch die Probenzuführeinrichtung Z, die in Figur 2 verdeutlicht ist. Die Probenzuführeinrichtung Z hat eine Grundplatte 6, in der eine Einbringöffnung 8 ausgespart ist. Der Einbringöffnung 8 ist ein innerhalb der Ebene der Grundplatte 6 verschieblich gelagerter Schieber 10 zugeordnet, der in Figur 2 teilweise geschnitten dargestellt ist. Unterhalb der Einbringöffnung 8, d. h. im Schwerefeld der Erde darunterliegend befindet sich eine Verschlusselement 12, das im Wesentlichen als Zylinder ausgebildet ist und im Innern eine Probenaufnahmekammer 14 ausbildet, die mit einem Boden 16 verschlossen ist. Die Probenaufnahmekammer 14 geht von der zylindrischen Umfangsfläche des Verschlusselementes 12 ab. Das Verschlusselement 12 ist verschwenkbar in einem Verschlusselementgehäuse 18 gelagert. Das Verschlusselement 12 und das Verschlusselementgehäuse 18 bestehen aus Messing.

Zwischen dem Verschlusselementgehäuse 18 und dem Verschlusselement 12 ist eine Dichtung in Form eines Dichtkörpers 20 aus Viton vorgesehen, der sich über die gesamte axiale Verstreckung des Verschlusselementes 12 erstreckt und dieses Verschlusselement im Wesentlichen vollumfänglich umgibt. Der Dichtkörper 20 befindet sich demnach zwischen dem Verschlusselementgehäuse 18 und dem Verschlusselement 12. Viton ist ein Beispiel für ein Fluorelastomer, welches eine hohe thermische und chemische Beständigkeit hat und sich auch bei höheren Temperaturen nicht auflöst.

Wie Figur 5 verdeutlicht, sind an dem Außenumfang des Verschlusselementes 12 zwei in Umfangsrichtung umlaufende Nuten 22 ausgespart, die eine Silikonpaste 24 als Schmierpaste in sich aufnehmen. Dadurch wird die Verschwenkbewegung des Verschlusselementes 12 in den Dichtkörper 20 geschmiert.

Die Figuren 2, 3 und 5 verdeutlichen jeweils oberhalb und unterhalb der Probenaufnahmekammer 14 vorgesehene Edelstahlhülsen. Eine erste Edelstahlhülse 26 erstreckt sich von der Unterseite der Grundplatte 6 bis zu dem Verschlusselement 12 und ist oben gerade und unten konkav abgeschnitten, sodass die Kontur der ersten Edelstahlhülse 26 an ihrem unteren Ende der Krümmung des Verschlusselementes 12 entspricht. In entsprechender Weise ist das obere Ende einer mit Bezugszeichen 28 gekennzeichneten zweiten Edelstahlhülse an die Krümmung des zylindrischen Verschlusselementes 12 angepasst. Das untere Ende der zweiten Edelstahlhülse 28 stößt an das obere Ende eines Übergangsstücks 30, das mit dem Verschlusselementgehäuse 18 unter Zwischenlage einer Dichtung verschraubt ist. Dieses Übergangsstück 30 hat mehrere Nuten 32 zum Einleiten eines Transportgases in einen mit Bezugszeichen 34 gekennzeichneten Einbringschacht, wobei die Nuten 32 mit einer nicht gezeigten Leitung für ein solches Transportgas kommuniziert. Oberhalb des Verschlusselementes 12 ist der Einbringschacht 34 mit einer Spülöffnung 36 für ein Inertgas versehen. Diese Spülöffnung 36 kommuniziert mit den in der Edelstahlhülse 26 eingestochenen Nuten. Die Nuten führen das Spülgas zum unteren Ende der Edelstahlhülse 26 und es dort in den Einbringschacht 34.

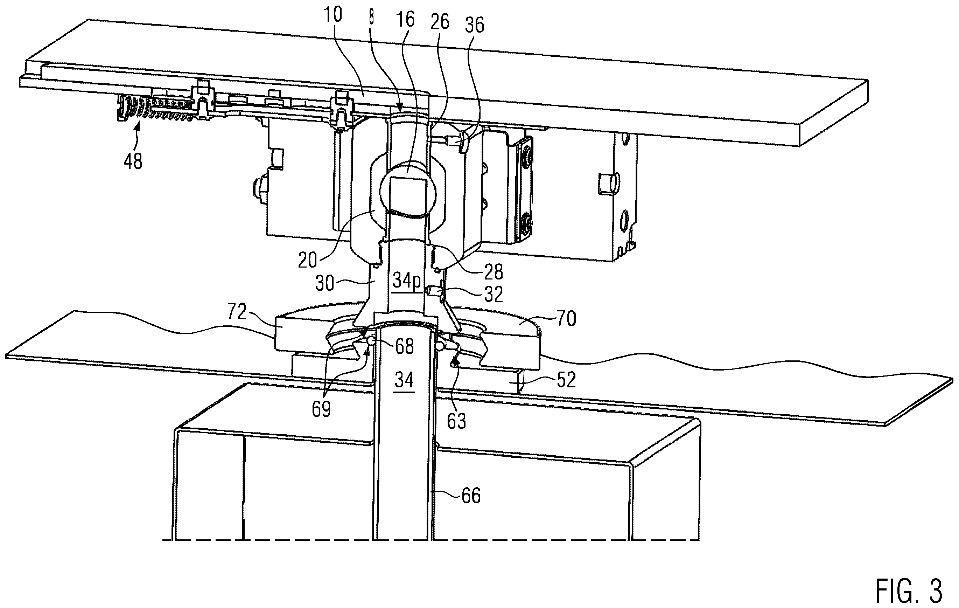

Der Einbringschacht 34 hat einen der Probenzuführeinrichtung Z zugeordneten Abschnitt 34p und einen reaktorseitigen Abschnitt 34r (vgl. Figur 3).

In Figur 2 befindet sich das Verschlusselement 12 in einer ersten Position, in welcher der Boden 16 der Probenaufnahmekammer 14 den Einbringschacht 34 unterseitig verschließt. So ist die Probenaufnahmekammer 14 zu der Einbringöffnung 8 hin offen und kann eine von oben abgeworfene Probe aufnehmen, die in Figur 2 mit Bezugszeichen 38 gekennzeichnet ist und sich auf dem Boden 16 der Probenaufnahmekammer 14 befindet.

In Figur 3 ist das Verschlusselement 12 um 180° in die zweite Position gedreht. Der Boden 16 verschließt den oberen Abschnitt des Einbringschachtes 34. Die Probenaufnahmekammer 14 kommuniziert mit dem unteren Abschnitt des Einbringschachtes 34 und dementsprechend mit dem Reaktor UR.

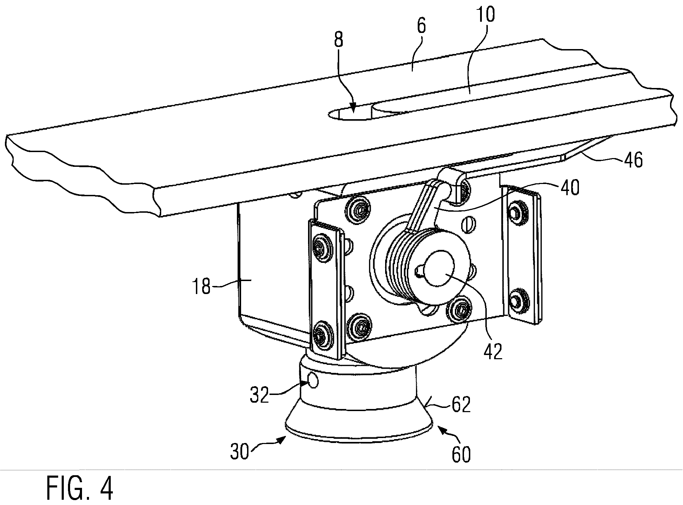

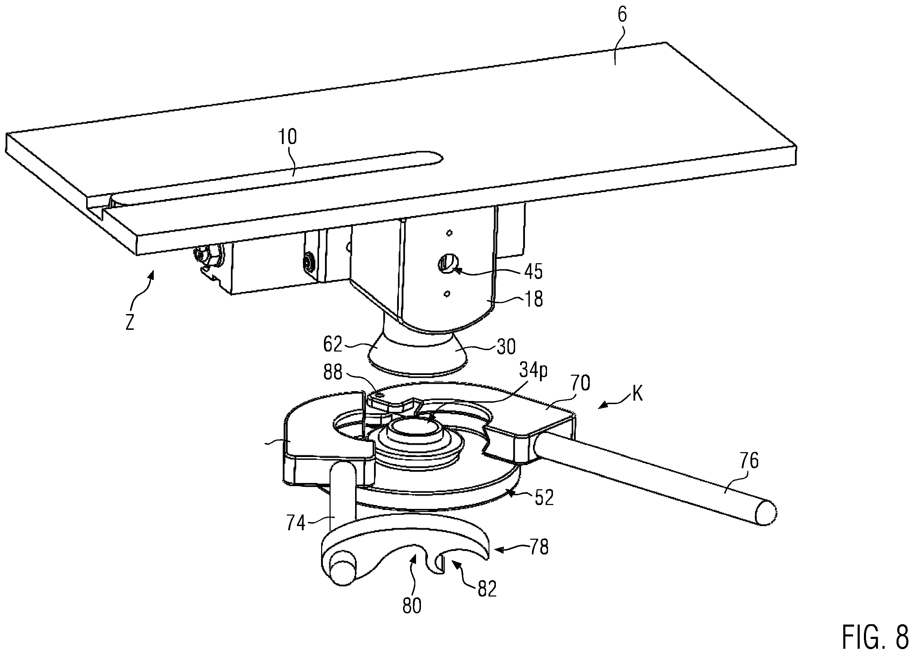

Die Figur 4 verdeutlicht einen Mitnehmer 40, der verdrehfest mit einer Welle 42 verbunden ist, die die Verschwenkbewegung des Verschlusselementes 12 vermittelt und über einen Antrieb 44 angetrieben ist. Bezugszeichen 45 kennzeichnet Funktionsflächen an einer freien Stirnfläche des Verschlusselementes 12 zum Eingriff eines Schraubendrehers (vgl. Figuren 5 und 8) Über einen Betätigungsarm 46, der mit dem Schieber 10 verbunden ist, wird der Schieber 10 mit der Verschwenkbewegung der Welle 42 zwangsgeführt. Dabei ist der Schieber 10 über eine Feder 48 in Richtung auf seine Verschlussstellung, d. h. in Richtung auf die Einbringöffnung 8 vorgespannt gehalten. In Figur 2 ist die Feder komprimiert; in Figur 3 demgegenüber expandiert.

Zum Abwerfen einer Probe wird diese über eine Zuführeinrichtung beispielsweise gemäß EP 3 112 859 B1 über die Einbringöffnung 8 verbracht. Der Antrieb 44 wird angetrieben, um das Verschlusselement 12 von der zweiten Position in die erste Position zu verbringen. Dabei nimmt der Mitnehmer 40 den Schieber 10 mit. Die Einbringöffnung 8 kommuniziert infolgedessen mit der Probenaufnahmekammer 14. Die Probe 38 fällt in die Probenaufnahmekammer 14. Durch die Spülöffnung 36 wird Inertgas in den oberen Bereich des Einbringschachtes 34 und die Probenaufnahmekammer 14 eingebracht. Die entsprechenden Räume werden geflutet. Umgebungsluft wird aus dem Verschlusselementgehäuse 18 vollständig entfernt und durch das Inertgas ersetzt. Während das Inertgas durch die Spülöffnung 36 eingebracht wird, wird das Verschlusselement 12 von der ersten Stellung gemäß Figur 2 in die zweite Stellung gemäß Figur 3 verbracht. Die Probe 38 fällt aufgrund der Schwerkraft von der Probenaufnahmekammer 14 in Richtung auf den Reaktor UR und wird dort verbrannt.

Die Figuren 6 und 7 zeigen eine Einrichtung zum Bewegen der Probenzuführeinrichtung Z. Wie Figur 2 erkennen lässt, ist das Übergangsstück 30 über Klauen 70, 72 mit einem darunter befindlichen Kopplungsstück 52 in einer noch nachstehend beschriebenen Weise verbunden. Das Lösen der entsprechenden Verbindung ermöglicht ein Verschwenken der Zuführeinrichtung Z in der in Figuren 6 und 7 verdeutlichten Art. Dafür ist die Grundplatte 6 mit den daran angeordneten Aggregaten über zwei Gelenkarme 54, 56 gegenüber einer nicht mehr dargestellten Unterkonstruktion, die die Halteplatte 4 umfassen kann, abgestützt. Die Zuführeinrichtung Z zusammen mit der Grundplatte 6 können so verschwenkt werden, dass diese außerhalb einer mit gestrichelten Linien angedeuteten axialen Verlängerung V des rohrförmigen Reaktors UR befindlich sind (vgl. Figur 7). So kann der Reaktor UR aus dem Analyseeinrichtungsgehäuse 2, speziell dem Reaktor UR gezogen und durch einen neuen ersetzt werden.

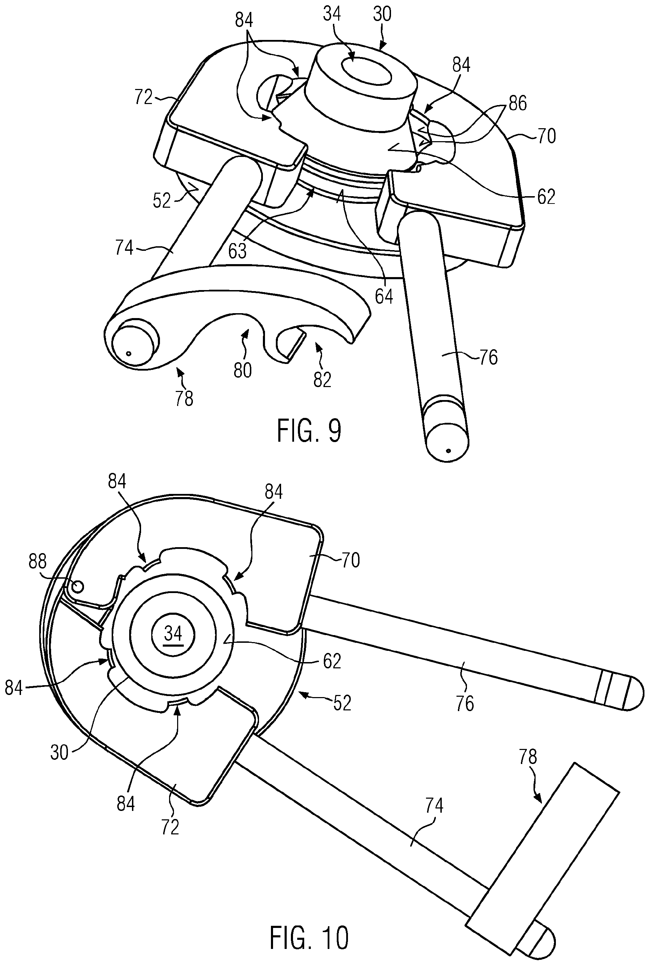

Die im Anschluss wiederherzustellende gasdichte Verbindung wird nachstehend insbesondere unter Bezugnahme auf die Figuren 8 bis 10 erläutert.

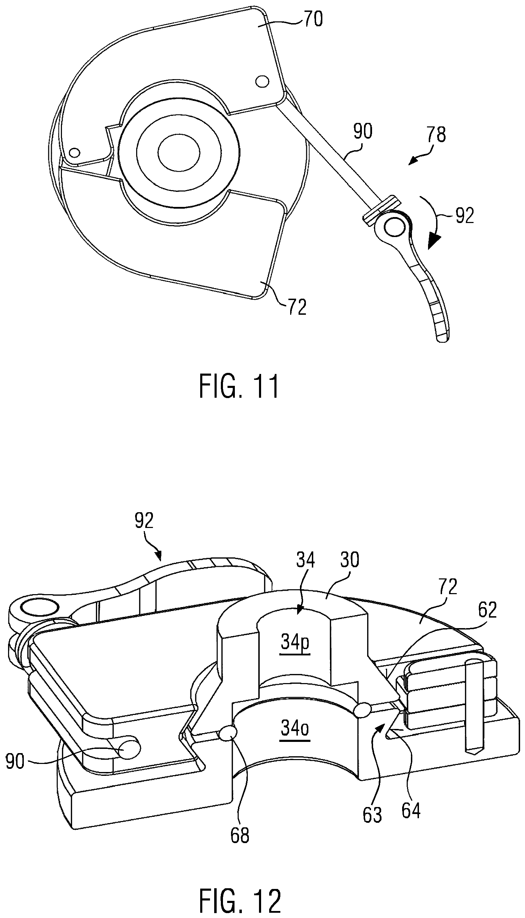

Das Übergangsstück 30 bildet ein freies unteres Ende des der Probenzuführeinrichtung Z zugeordneten Abschnitt 34p des Einbringschachtes 34 aus. Das untere freie Ende des Übergangsstücks 30 ist nach Art eines Konus ausgebildet. Der mit Bezugszeichen 60 gekennzeichnete Konus bildet eine in Umfangsrichtung durchgehende Schrägfläche 62 aus, die nach oben und damit von dem freien Ende des Übergangsstücks 30 wegweist. Bei dem gezeigten Ausführungsbeispiel hat das Kopplungsstück 52 ebenfalls einen Konus 63, der von dem entsprechenden oberen freien Ende des Kopplungsstücks 52 wegweist und eine derart ausgerichtete Schrägfläche 64 (vgl. auch Figur 12) ausbildet. Das Kopplungsstücks 52 umgibt einen dem Reaktor UR zugeordneten Abschnitt 34r des Einbringschachtes 34.

Das Übergangsstück 30 vergrößert in seinem untersten Bereich den Einbringschacht 34 und ist zur Aufnahme eines mit Bezugszeichen 66 gekennzeichneten Glasrohres angepasst ausgebildet, welches mit dem Reaktor UR Material gefüllt ist (vgl. Figuren 2 und 3). Im gefügten Zustand, der nachstehend noch näher erläutert werden wird, ist dieses Glasrohr 66 innerhalb eines Dichtringes 68 vorgesehen, der zwischen dem Übergangsstück 30 und dem Kopplungsstück 52 geklemmt ist. Dazu befindet sich der Dichtring 68 in konkav geformten Mulden 69, deren Kontur im Wesentlichen der Außenkontur des Dichtringes 68 entspricht, und zwar nicht nur im Hinblick auf den Durchmesser des Dichtringes 68, sondern auch im Hinblick auf die umfängliche Kontur desselben.

Wie die Figuren 8 bis 10 vermitteln, hat die hier verdeutlichte und mit Bezugszeichen K gekennzeichnete Kopplungseinrichtung zwei Klauen 70, 72, die abgesehen von der Ausbildung eines Gelenks im Wesentlichen identisch ausgebildet und mit Betätigungsarmen 74, 76 versehen sind. Dabei trägt der mit Bezugszeichen 74 gekennzeichnete Betätigungsarm ein Festlegungselement 78. Das Festlegungselement 78 hat eine erste zur Aufnahme des Betätigungsarms 76 angepasst ausgebildete Mulde 80 und an seinem freien Ende eine zweite Mulde 82.

Die Klauen 70, 72 haben jeweils zwei innenumfänglich abragende Gegenflächenabschnitte 84, die einander zugerichtete und nach innen weisende Keilflächen 86 ausbilden. Die Gegenflächenabschnitte 84 sind zur Anlage gegen die Schrägflächen 62, 64 angepasst ausgebildet. Zur thermischen Entkopplung der Klauen 70, 72 gegenüber den Schrägflächen 62, 64 greifen die Klauen 70, 72 jedoch lediglich über einen geringen Umfangsabschnitt an dem Übergangsstück 30 beziehungsweise dem Kopplungsstück 52 an.

Bei dem gezeigten Ausführungsbeispiel haben die Schrägflächen 62, 64 in etwa die gleiche Neigung wie die Keilflächen 86 es sind aber auch Ausführungen denkbar bei denen die Neigung der Schrägflächen die der Keilflächen übersteigt. Die Oberflächen der Keilflächen 86 und/oder die Schrägflächen 62, 64 können zur Verringerung der Reibung mit Teflon beschichtet sein. Die Klauen 70, 72 sowie das Übergangsstück 30 und das Kopplungsstück 52 sind aus Messing gefertigt.

Die Klauen 70, 72 sind jeweils verschwenkbar um einen Gelenkzapfen 88 gelagert, der ortsfest an der Halteplatte 4 oder dem Kopplungsstück 52 abgestützt ist. Die Klauen 70, 72 sind nicht nur verschwenkbar, sondern auch axial beweglich gegenüber diesem Gelenkzapfen 88. So können die Klauen 70, 72 bei der Annäherung an die Schrägflächen 62, 64 einer etwaigen Annäherung des Übergangsstücks 30 in Richtung auf das Kopplungsstück 52 folgen.

Zum Verschwenken der Zuführeinrichtung Z mit der Grundplatte 6 mag der Betätigungsarm 76 in die zweite Mulde 82 des Festlegungselementes 78 eingebracht werden. Dadurch wird ein gewisser radialer Abstand der beiden Klauen 70, 72 zueinander eingestellt, der es ermöglicht, den Konus 60 zwischen den Klauen 70, 72 hindurch nach oben herauszuführen und von dem Reaktor UR zu beabstanden. Durch Verschwenken der Zuführeinrichtung Z wird die in Figur 7 gekennzeichneten Stellung erreicht, in der es möglich ist, das Reaktorrohr des Reaktors UR aus dem Innern der Analysevorrichtung bzw. dem Reaktor UR herauszuziehen. Nach dem Austausch des Reaktorrohres wird das Übergangsstück 30 wieder dem Reaktor UR angenähert.

Der aus EPDM bestehende Dichtring 68 wird dabei zwischen dem Übergangsstück 30 und dem Kopplungsstück 52 geklemmt. Die beiden Betätigungsarme 74, 76 werden aufeinander zugeschwenkt, und zwar üblicherweise durch einhändige Betätigung an den beiden Betätigungsarmen 74, 76. Dabei legen sich die Keilfläche 86 gegen die Schrägflächen 62, 64. Es ergibt sich durch die Schrägstellung der Schrägflächen dabei nicht nur eine radiale Kraft, sondern auch eine axiale Kraft, die das Übergangsstück 30 in axialer Richtung näher an Kopplungsstück 52 bringt.

Da die Klauen 70, 72 axial verschieblich an dem Gelenkzapfen 88 gelagert sind, können die Klauen dieser Bewegung ungehindert folgen. Der Dichtring 68 wird komprimiert und an den Außenumfang des Glasrohres 66 gelegt. Dadurch ist eine gasdichte Verbindung zwischen der Zuführeinrichtung Z und dem Reaktor UR und damit den beiden Abschnitten 34p, 34r des Einbringschachtes 34 geschaffen. Auch wird das Glasrohr 66 zu den metallischen Flächen von Übergangsstück 30 und Kopplungsstück 52 beabstandet und somit mechanisch und thermisch davon entkoppelt. Die Klemmung wird dadurch gesichert, dass der Betätigungsarm 74 in die erste Mulde 80 des Festlegungselementes 78 eingelegt und dort verriegelt wird.

Die Erfindung ist nicht auf das gezeigte Ausführungsbeispiel nach den Figuren 8 bis 10 beschränkt. Eine alternative Ausgestaltung eines Festlegungselementes 78 ist in den Figuren 11 und 12 gezeigt. Dort sind die beiden Klauen 70, 72 auch über einen Kniehebel unter Vorspannung gehalten, der in Figur 11 am Ende einer Spannstange 90 vorgesehen und mit Bezugszeichen 92 gekennzeichnet ist. Die andere der Klauen 72 kann an ihrem dem Gelenkzapfen 88 entfernten Ende einen Schlitz aufweisen, in welchen die Spannstange 90 eingebracht werden kann, sodass der Kniehebel 92 gegen eine äußere Wangenfläche der anderen Klaue 72 angelegt und dagegen verspannt werden kann (vgl. Figur 12).

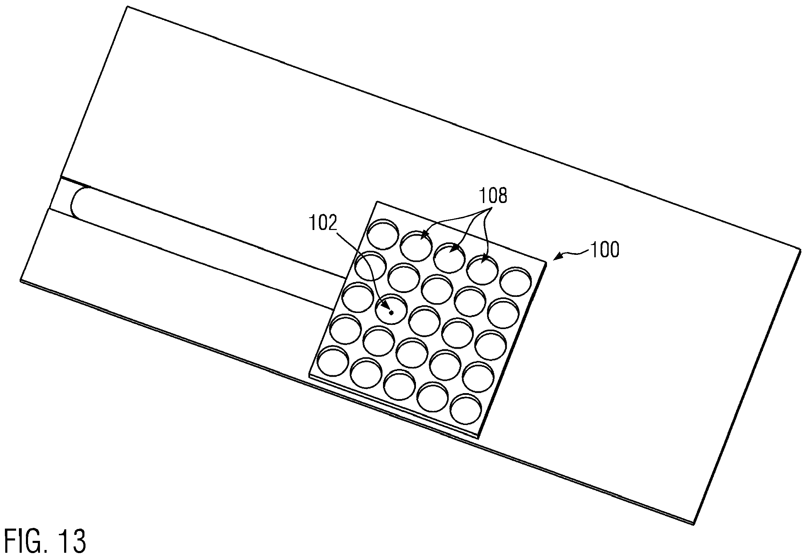

Die Figuren 13-15 verdeutlichen eine Abwandlung des zuvor beschriebenen Ausführungsbeispiels, die eine verbesserte Spülung des Einbringschachtes 34 sowie der als nächstes einzubringenden Probe verdeutlicht, die in einem Probenhalter 100 aufgenommen ist, der über eine mit Bezugszeichen B gekennzeichnete Betätigungseinrichtung parallel zu der Oberfläche der Grundplatte 6 bewegt werden kann und in den Figuren 6 und 7 gezeigt ist. Das Ausführungsbeispiel folgt insofern dem Vorschlag gemäß EP 3 112 859 B1. Der Probenhalter 100 stützt sich über Teflonfüße gegenüber der Oberfläche der Grundplatte 6 ab, so dass der Probenhalter 100 um wenige Hundertstel Millimetern mit seiner flächigen Unterseite gegenüber der Grundplatte 6 angehoben ist.

Bei dem modifizierten Ausführungsbeispiel hat der Schieber 10 eine Spülbohrung 102, die im geschlossenen Zustand des Schiebers 10 mittig über dem Einbringschacht 34 angeordnet ist.

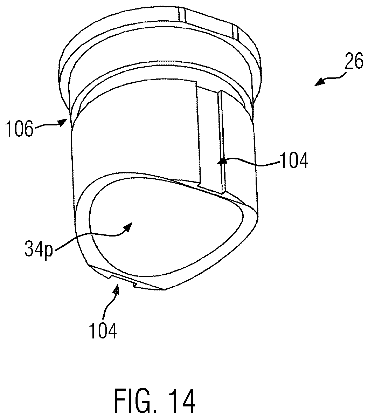

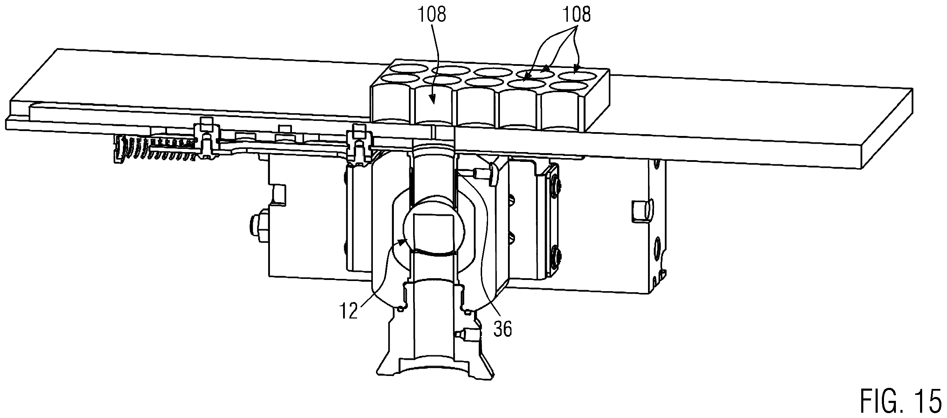

Wie sich aus den Figuren 14 und 15 ergibt, ist bei dem hier gezeigten Ausführungsbeispiel die obere, erste Edelstahlhülse 26 modifiziert. Sie hat an ihrem Außenumfang an gegenüberliegenden Seiten je eine Längsnut 104, die an dem unteren Ende der ersten Edelstahlhülse 26 frei ausläuft und an ihrem oberen Ende in eine Umfangsnut 106 mündet. Im montierten Zustand der ersten Edelstahlhülse 26 befindet sich diese Umfangsnut 106 auf Höhe der Spülöffnung 36.

Nach Abwerfen einer Probe und in der in Figur 15 gezeigten zweiten Stellung wird bei diesem modifizierten Ausführungsbeispiel der gesamte der Probenzuführeinrichtung Z zugeordnete Abschnitt 34p des Einbringschachtes 34 gespült. Dazu wird über die Spülöffnung 36 Spülgas eingeleitet. Dieses verteilt sich umfänglich über die Umfangsnut 106 und wird im Folgenden über die beiden Längsnuten 104 nach unten geführt. Das Spülgas tritt am unteren Ende der ersten Edelstahlhülse 26 in den Einbringschacht 34 ein und überstreicht dabei die Außenumfangsfläche des Verschlusselementes 12. Aufgrund des nachfließenden Spülgases steigt das Spülgas in dem Einbringschacht 34 nach oben und durchsetzt schließlich die Spülbohrung 102. Das die Spülbohrung 102 durchsetzende Spülgas tritt in eine Probenabwurfkammer 108 ein, die oberhalb der Spülbohrung 102 vorgesehen und durch Probenhalter 100 gebildet ist. Nachfolgendes Spülgas spült schließlich auch die entsprechende Abwurfkammer 108 vollständig, so dass vor dem Abwerfen der nächsten Probe durch Öffnen des Schiebers 10 etwaige Atmosphären- und Fremdgase, die die Messung verfälschen können, aus der Probenabwurfkammer 108 entfernt sind.

Durch das geringe Spaltmaß zwischen dem Probenhalter 100 und der Oberfläche der Grundplatte 6 strömt das Spülgas auch in diejenigen Probenabwurfkammern 108, die benachbart zu derjenigen Probenabwurfkammer 108 vorgesehen sind, die sich exakt über dem Einbringschacht 34 befindet.

Durch die Längsnut 104 und die Umfangsnut 106 ist zwischen der Edelstahlhülse 26 und dem Verschlusselementgehäuse 18 eine Spülführung ausgebildet, die an dem Verschlusselement 12 endet und durch dieses begrenzt ist. So wird sichergestellt, dass das Spülgas am unteren Ende der Probenzuführeinrichtung Z zugeordneten Abschnitts 34p des Einbringschachtes 34 eingeleitet wird und entgegen der Zuführrichtung der Probe den gesamten Zuführschacht 34 zumindest bis zur Einbringöffnung 8 überstreicht.

## Patentansprüche

1. Analyseeinrichtung für die Elementaranalyse mit einer Probenzuführeinrichtung (Z) mit einer Einbringöffnung (8) zum Einbringen einer Probe (38), einer Leitung für Sauerstoff und Inertgas, einem Reaktor (UR) für die katalytische Verbrennung der Probe (38), einem stromabwärts des Reaktors vorgesehenen Reduktionsreaktor (RR), einem stromabwärts des Reduktionsreaktors (RR) vorgesehenen Wasserfalle (W), einem stromabwärts der Wasserfalle (W) vorgesehenen Adsorber(A), einem stromabwärts des Absorbers (A) vorgesehenen Detektor (WLD), einer Logikeinheit (PC) zur Verarbeitung der von dem Detektor (WLD) übermittelten Daten und einer Kopplungseinrichtung (K), wobei in Einbringrichtung hinter der Einbringöffnung (8) ein zu dem Reaktor (UR) führender Einbringschacht (34) vorgesehen ist, der zwischen der Probenzuführeinrichtung (Z) und dem Reaktor (UR) trennbar ist, wobei die Probenzuführeinrichtung (Z) zum Freilegen eines reaktorseitigen Abschnitts (34r) des Einbringschachts (34) relativ zu dem Reaktor (34) beweglich ist und wobei der reaktorseitige Abschnitt (34r) des Einbringschachts (34) und ein der Probenzuführeinrichtung zugeordneter Abschnitt (34p) des Einbringschachts (34) über die Kopplungseinrichtung (K) miteinander verbindbar sind,
**dadurch gekennzeichnet,**
**dass** die Kopplungseinrichtung (K) zumindest zwei Klauen (70, 72) aufweist, die relativ zueinander beweglich sind, dass der reaktorseitige Abschnitt (34r) des Einbringschachts (34) und der der Probenzuführeinrichtung zugeordnete Abschnitt (34p) des Einbringschachts (34) jeweils von ihrem freien Ende weg weisende Schrägflächen (62, 64) aufweisen, die zur Festlegung der beiden Abschnitte (34p, 34r) zum Fügen des Einbringschachtes (34) mit Gegenflächen (84) der Klauen (70, 72) zusammenwirken.

2. Analyseeinrichtung nach Anspruch 1, **dadurch gekennzeichnet, dass** die Schrägflächen jeweils durch einen Konus (60; 63) gebildet sind.

3. Analyseeinrichtung nach Anspruch 1 oder 2, **dadurch gekennzeichnet, dass** die Schrägflächen (62, 64) jeweils durch einen rotationssymmetrischen Konus (60; 63) gebildet sind.

4. Analyseeinrichtung nach Anspruch 2 oder 3, **dadurch gekennzeichnet, dass** die Schrägflächen (62, 64) an dem freien Ende der jeweiligen Abschnitte (34p, 34r) vorgesehen sind.

5. Analyseeinrichtung nach einem der vorherigen Ansprüche, **dadurch gekennzeichnet, dass** die festgelegten Abschnitte (34p, 34r) zwischen sich einen Dichtring (68) einschließen.

6. Analyseeinrichtung nach Anspruch 6, **dadurch gekennzeichnet, dass** der Dichtring (68) zwischen die freien Enden der Abschnitte (34p, 34r) eingelegt ist.

7. Analyseeinrichtung nach Anspruch 6 oder 7, **dadurch gekennzeichnet, dass** der Dichtring (68) an einer konkaven Mulde (69) anliegt, die zumindest in einem der Abschnitte ausgebildet ist.

8. Analyseeinrichtung nach einem der vorherigen Ansprüche, **dadurch gekennzeichnet, dass** die Klauen (70, 72) um einen gemeinsamen Gelenkzapfen (88) verschwenkbar sind.

9. Analyseeinrichtung nach Anspruch 8, **dadurch gekennzeichnet, dass** die Klauen (70, 72) in axialer Richtung des Gelenkzapfens (88) relativ zu dem Gelenkzapfen (88) beweglich sind.

10. Analyseeinrichtung nach Anspruch 9, **dadurch gekennzeichnet, dass** der Gelenkzapfen (88) reaktorseitig abgestützt ist und dass die Klauen (70, 72) in Längsrichtung des Gelenkzapfens (88) verschieblich sind.

11. Analyseeinrichtung nach einem der vorherigen Ansprüche, **dadurch gekennzeichnet, dass** jede der Klauen (70, 72) zueinander weisende schräge Gegenflächen (84) hat, die zum Fügen des Einbringschachtes (34) mit den Schrägflächen (62, 64) der Abschnitte (34p, 34r) zusammenwirken.

12. Analyseeinrichtung nach einem der vorherigen Ansprüche, **dadurch gekennzeichnet, dass** mehrere Gegenflächenabschnitte (84) an dem Innenumfang der Klauen (70, 72) nach innen vorspringend verteilt und in axialer Richtung übereinander vorgesehen sind.

13. Analyseeinrichtung nach einem der vorherigen Ansprüche, **dadurch gekennzeichnet, dass** jede der Klauen (70; 72) einen von der jeweiligen Klaue (70; 72) abragenden Betätigungsarm (74, 76) aufweist und dass zumindest einer der Betätigungsarme (74) ein Festlegungselement (78; 92) aufweist, mit dem der andere der Betätigungsarme (76) gegenüber dem einen der Betätigungsarme (74) festlegbar ist.

14. Analyseeinrichtung nach Anspruch 13, **dadurch gekennzeichnet, dass** zumindest einer der Betätigungsarme (74) ein Festlegungselement (78) aufweist, das mit dem anderen der Betätigungsarme (76) zur Festlegung der beiden Abschnitte (34p, 34r) zusammenwirkt und in einer Öffnungsstellung der Betätigungsarme (74, 76), in der die Klauen (70, 72) zum Einbringen der beiden Abschnitte (34p, 34r) ausgerückt sind, die beiden Betätigungsarme (74, 76) beabstandet festlegt.

## Claims

1. An analyzer device for elemental analysis comprising a sample feeding device (Z) comprising an insertion opening (8) for inserting a sample (38), a line for oxygen and inert gas, a reactor (UR) for the catalytic combustion of the sample (38), a reduction reactor (RR) provided downstream of the reactor, a water trap (W) provided downstream of the reduction reactor (RR), an adsorber (A) provided downstream of the water trap (W), a detector (WLD) provided downstream of the absorber (A), a logic unit (PC) for processing the data transmitted by the detector (WLD) and a coupling device (K), wherein an insertion shaft (34) leading to the reactor (UR) is provided downstream of the insertion opening (8) in the insertion direction, which shaft can be separated between the sample feeding device (Z) and the reactor (UR), wherein the sample feeding device (Z) is movable relative to the reactor (34) for exposing a reactor-side section (34r) of the introduction shaft (34), and wherein the reactor-side section (34r) of the introduction shaft (34) and a section (34p) of the introduction shaft (34) associated with the sample feeding device can be connected to each other via the coupling device (K),
**characterized in that**
the coupling device (K) includes at least two claws (70, 72) which are movable relative to each other, **in that** the reactor-side section (34r) of the insertion shaft (34) and the section (34p) of the insertion shaft (34) associated with the sample feeding device each include inclined surfaces (62, 64) which cooperate with opposing surfaces (84) of the claws (70, 72) to fix the two sections (34p, 34r) for assembling the insertion shaft (34).

2. The analyzer device according to claim 1, **characterized in that** the inclined surfaces are each defined by a cone (60; 63).

3. The analyzer device according to claims 1 or 2, **characterized in that** the inclined surfaces (62, 64) are each defined by a rotationally symmetric cone (60; 63).

4. The analyzer device according to claims 2 or 3, **characterized in that** the inclined surfaces (62, 64) are provided at the free end of the respective sections (34p, 34r).

5. The analyzer device according to any one of the preceding claims, **characterized in that** the fixed sections (34p, 34r) enclose a sealing ring (68) therebetween.

6. The analyzer device according to claim 6, **characterized in that** the sealing ring (68) is interposed between the free ends of the sections (34p, 34r).

7. The analyzer device according to claims 6 or 7, **characterized in that** the sealing ring abuts against a concave recess (69) formed in at least one of the sections.

8. The analyzer device according to any one of the preceding claims, **characterized in that** the claws (70, 70) are pivotable about a common pivot pin (88).

9. The analyzer device according to claim 8, **characterized in that** the claws (70, 72) are movable an axial direction of the pivot pin (88) relative to the pivot pin (88).

10. The analyzer device according to claim 9, **characterized in that** the pivot pin (88) is supported on the reactor side and **in that** the claws (70, 72) are displaceable in a longitudinal direction of the pivot pin (88).

11. The analyzer device according to any one of the preceding claims, **characterized in that** each of the claws (70, 72) includes inclined opposing surfaces (84) facing each other and cooperating with the inclined surfaces (62, 64) of the sections (34p, 34r) for assembling the insertion shaft (34).

12. The analyzer device according to any one of the preceding claims, **characterized in that** a plurality of opposing surface portions (84) are distributed along the inner circumference of the claws (70, 72) protruding inwardly and provided on top of each other in the axial direction.

13. The analyzer device according to any one of the preceding claims, **characterized in that** each of the claws (70; 72) includes an actuating arm (74, 76) projecting from the respective claw (70; 72), and **in that** at least one of the actuating arms (74) includes a fixing element (78; 92) by means of which the other one of the actuating arms (76) can be fixed relative to the one of the actuating arms (74).

14. The analyzer device according to claim 13, **characterized in that** at least one of the actuating arms (74) includes a fixing element (78) which cooperates with the other one of the actuating arms (76) for fixing the two sections (34p, 34r) and which in an opening position of the actuating arms (74, 76) in which the claws (70, 72) are disengaged for insertion of the two sections (34p, 34r) fixes the two actuating arms (74, 76) in a spaced relationship.

## Revendications

1. Dispositif d'analyse pour l'analyse élémentaire, comprenant un dispositif d'amenée d'échantillon (Z) avec un orifice d'introduction (8) permettant l'introduction d'un échantillon (38), une conduite pour oxygène et gaz inerte, un réacteur (UR) pour la combustion catalytique de l'échantillon (38), un réacteur de réduction (RR) prévu en aval dudit réacteur, un piège à eau (W) prévu en aval du réacteur de réduction (RR), un adsorbeur (A) prévu en aval du piège à eau (W), un détecteur (WLD) prévu en aval de l'absorbeur (A), une unité logique (PC) permettant de traiter les données transmises par le détecteur (WLD) et un dispositif de couplage (K), dans lequel un puits d'introduction (34), menant au réacteur (UR) et pouvant être séparé entre le dispositif d'amenée d'échantillon (Z) et le réacteur (UR), est prévu derrière l'orifice d'introduction (8) dans la direction d'introduction, dans lequel le dispositif d'amenée d'échantillon (Z) est mobile par rapport au réacteur (34) afin d'exposer une section latérale (34r), située côté réacteur, du puits d'introduction (34) et dans lequel la section latérale (34r), située côté réacteur, du puits d'introduction (34) et une section (34p), associée au dispositif d'amenée d'échantillon, du puits d'introduction (34) peuvent être reliées l'une à l'autre par l'intermédiaire du dispositif de couplage (K),
**caractérisé en ce que**
le dispositif de couplage (K) présente au moins deux griffes (70, 72) qui sont mobiles l'une par rapport à l'autre, **en ce que** la section (34r), située côté réacteur, du puits d'introduction (34) et la section (34p), associée au dispositif d'amenée d'échantillon, du puits d'introduction (34) présentent respectivement des surfaces obliques (62, 64) se détournant de l'extrémité libre desdites sections et coopérant avec des surfaces homologues (84) des griffes (70, 72) afin de fixer les deux sections (34p, 34r) en vue de l'assemblage du puits d'introduction (34).

2. Dispositif d'analyse selon la revendication 1, **caractérisé en ce que** les surfaces obliques sont formées respectivement par un cône (60 ; 63).

3. Dispositif d'analyse selon la revendication 1 ou 2, **caractérisé en ce que** les surfaces obliques (62, 64) sont formées respectivement par un cône (60 ; 63) à symétrie de rotation.

4. Dispositif d'analyse selon la revendication 2 ou 3, **caractérisé en ce que** les surfaces obliques (62, 64) sont prévues à l'extrémité libre des sections (34p, 34r) respectives.

5. Dispositif d'analyse selon l'une quelconque des revendications précédentes, **caractérisé en ce que** les sections (34p, 34r) fixées renferment entre elles une bague d'étanchéité (68).

6. Dispositif d'analyse selon la revendication 6, **caractérisé en ce que** la bague d'étanchéité (68) est insérée entre les extrémités libres des sections (34p, 34r).

7. Dispositif d'analyse selon la revendication 6 ou 7, **caractérisé en ce que** la bague d'étanchéité (68) repose au niveau d'un creux concave (69) formé au moins dans l'une des sections.

8. Dispositif d'analyse selon l'une quelconque des revendications précédentes, **caractérisé en ce que** les griffes (70, 72) peuvent pivoter autour d'un pivot d'articulation (88) commun.

9. Dispositif d'analyse selon la revendication 8, **caractérisé en ce que** les griffes (70, 72) sont mobiles par rapport au pivot d'articulation (88) dans la direction axiale du pivot d'articulation (88).

10. Dispositif d'analyse selon la revendication 9, **caractérisé en ce que** le pivot d'articulation (88) est supporté côté réacteur et **en ce que** les griffes (70, 72) peuvent être déplacées dans la direction longitudinale du pivot d'articulation (88).

11. Dispositif d'analyse selon l'une quelconque des revendications précédentes, **caractérisé en ce que** chacune des griffes (70, 72) possède des surfaces homologues (84) obliques tournées l'une vers l'autre qui coopèrent avec les surfaces obliques (62, 64) des sections (34p, 34r) en vue de l'assemblage du puits d'introduction (34).

12. Dispositif d'analyse selon l'une quelconque des revendications précédentes, **caractérisé en ce que** plusieurs sections de surface homologue (84) sont réparties sur la périphérie intérieure des griffes (70, 72) de manière à faire saillie vers l'intérieur et sont prévues pour être superposées dans la direction axiale.

13. Dispositif d'analyse selon l'une quelconque des revendications précédentes, **caractérisé en ce que** chacune des griffes (70 ; 72) présente un bras d'actionnement (74, 76) dépassant de la griffe (70 ; 72) respective et **en ce qu'**au moins un bras d'actionnement (74) présente un élément de fixation (78 ; 92) avec lequel l'autre bras d'actionnement (76) peut être fixé par rapport au bras d'actionnement (74).

14. Dispositif d'analyse selon la revendication 13, **caractérisé en ce qu'**au moins un bras d'actionnement (74) présente un élément de fixation (78) qui coopère avec l'autre bras d'actionnement (76) pour fixer les deux sections (34p, 34r) et qui fixe les deux bras d'actionnement (74, 76) à distance l'un de l'autre dans une position d'ouverture des bras d'actionnement (74, 76) dans laquelle les griffes (70, 72) sont mises hors de prise en vue de l'introduction des deux sections (34p, 34r).
